# EUROPÄISCHE PATENTANMELDUNG

(11) **EP 1 227 648 A2**
(43) Veröffentlichungstag der Anmeldung: **31.07.2002**
(21) Anmeldenummer: 02001358.7
(22) Anmeldetag: 18.01.2002
(51) Int. Cl.: H04M 11/02, G06F 17/60

(54) **Preisanzeigesystem**

(30) Priorität: 18.01.2001 DE 10102196
(71) Anmelder: Printoplast AG, 8910 Affoltern a/Albis (CH)
(72) Erfinder: Grünhut, Rolf, 8907 Wettswil (CH)
(74) Vertreter: Schaumburg, Thoenes & Thurn

(57) **Zusammenfassung**

Bei einem Preisanzeigesystem für Verkaufsstätten mit jeweils mindestens einem Verkaufsraum, in dem jeweils eine Mehrzahl von Warenregalen (22) angeordnet ist, wobei an den Regalböden (24) Halteschienen (26) zur Halterung von Preisanzeigemoduln (28) befestigt sind, umfassend eine zentrale Datenverarbeitungsanlage (10), mindestens einen mit dieser über eine zur Datenübertragung geeignete Leitung (16) verbundenen Raumtransceiver (18) zum drahtlosen Senden und Empfangen von Signalen und mindestens einen einem jeweiligen Regalboden (24) zugeordneten Regaltransceiver (20), der mit dem Raumtransceiver (18) in drahtlosem Signalaustausch steht und seinerseits mit einer Mehrzahl von Preisanzeigemoduln (28) verbunden ist, wobei innerhalb der Halteschienen (26) Leiter zur Energieversorgung der Anzeigemoduln (28) und zum Datenaustausch zwischen dem Regaltransceiver (20) und den Anzeigemoduln (28) vorgesehen sind, ist an jeder Halteschiene (26) mindestens ein Solarmodul (30) vorgesehen, der die Stromversorgung für eine Mehrzahl von Anzeigemoduln (28) bildet.

## Beschreibung

Die Erfindung betrifft ein Preisanzeigesystem für Verkaufsstätten mit jeweils mindestens einem Verkaufsraum, in dem jeweils eine Mehrzahl von Warenregalen mit jeweils einer Mehrzahl von Regalböden angeordnet ist, wobei an den Regalböden Halteschienen zur Halterung von Preisanzeigemoduln befestigt sind, umfassend eine zentrale Datenverarbeitungsanlage, mindestens einen mit dieser über eine zur Datenübertragung geeignete Leitung verbundenen Raumtransceiver zum drahtlosen Senden und Empfangen von Signalen und mindestens einen einem jeweiligen Regalboden zugeordneten Regaltransceiver, der mit dem Raumtransceiver in drahtlosem Signalaustausch steht und seinerseits mit einer Mehrzahl von Preisanzeigemoduln verbunden ist, wobei innerhalb der Halteschienen Leiter zur Energieversorgung der Anzeigemoduln und zum Datenaustausch zwischen dem Regaltransceiver und den Anzeigemoduln vorgesehen sind.

Ein Preisanzeigesystem der vorstehend genannten Art ist beispielsweise aus der EP-A-0 396 414 bekannt. Bei der dort beschriebenen Lösung enthält der jedem Regalboden zugeordnete Regaltransceiver auch eine Batterie zur Stromversorgung der einzelnen Anzeigemoduln. Diese Lösung hat den Nachteil, daß zum einen die Batterie an den Transceivern regelmäßig erneuert werden muß und daß diese Batterie so dimensioniert sein muß, daß sie die maximal mögliche Anzahl von Anzeigemoduln über einen vernünftigen Zeitraum hin ausreichend versorgen kann. Dies bedeutet, daß man eine teuere Batterie benötigt, die unter Umständen zu groß dimensioniert ist, wenn nur eine geringe Anzahl von Anzeigemoduln an dem jeweiligen Regalboden benötigt wird.

Aus der WO 94/11832 ist bereits ein Preisanzeigesystem bekannt, bei dem jeder Anzeigemodul eine Solarzelle und eine Sende-Empfangs-Einheit für die drahtlose Datenübermittlung hat. Dieses System ist zwar sehr flexibel, da die Anzeigemoduln von einer externen Stromversorgung unabhängig sind. Die einzelnen Anzeigemoduln sind jedoch sehr aufwendig und entsprechend teuer. Da diese Anzeigemoduln in großer Anzahl benötigt werden, stellen die Kosten für die Moduln einen erheblichen Teil der Gesamtkosten des Systems dar.

Der Erfindung liegt die Aufgabe zugrunde, ein Preisanzeigesystem der eingangs genannten Art so auszubilden, daß einerseits eine große Flexibilität des Systems hinsichtlich der Anzahl der verwendeten Anzeigemoduln besteht und daß andererseits die Kosten des Systems niedrig gehalten werden.

Diese Aufgabe wird bei einem Preisanzeigesystem der eingangs genannten Art dadurch gelöst, daß an jeder Halteschiene mindestens ein Solarmodul vorgesehen ist, der die Stromversorgung für eine Mehrzahl von Anzeigemoduln bildet. Beispielsweise kann ein Solarmodul für circa zehn Anzeigemoduln vorgesehen sein.

Mit der erfindungsgemäßen Lösung hat man ein wartungsfreundliches System, da der Solarmodul nicht ausgetauscht zu werden braucht und in aller Regel über lange Zeit hin wartungsfrei arbeitet. Der Solarmodul kann so dimensioniert sein, daß man in aller Regel mit einem Solarmodul pro Regalboden auskommt. Werden jedoch an einem Regalboden mehr Anzeigeelemente benötigt, als von einem Solarmodul versorgt werden können, wird ein weiterer Solarmodul hinzugefügt.

Vorzugsweise haben die Halteschienen ein C-Profil, an dessen Innenseite die Leiter angeordnet sind und zwischen dessen C-Schenkeln die Anzeigemoduln und gegebenenfalls auch der jeweilige Regaltransceiver so einclipsbar sind, daß an ihrer Außenseite angeordnete Kontaktelemente mit den Leitern in Berührung treten. Dadurch können die Anzeigemoduln ohne Montagearbeiten rasch ausgetauscht oder versetzt werden. Auch die Solarmoduln können in der gleichen Weise austauschbar an der Halteschiene gehalten werden.

Vorzugsweise sind die Leiter an der Halteschiene von selbstklebenden Metallbändern gebildet, die an der Innenfläche der Halteschiene lösbar angeklebt sind. Sie können damit rasch ausgetauscht und erneuert werden, wenn dies wegen einer Beschädigung oder einer Abnutzung der Leiter notwendig sein sollte. Auch können so beispielsweise für den Energieleiter Segmente gebildet werden, die jeweils einer Gruppe von Anzeigemoduln zugeordnet sind, die von einem Solarmodul versorgt werden.

Die Halteschiene ist zweckmäßigerweise durch einen die Anzeigemodule überdeckenden transparenten Deckel abgedeckt, so daß die Anzeigemodule gegen Verschmutzung, Beschädigung oder Entwendung gesichert sind. Vorzugsweise ist der transparente Deckel an den C-Schenkeln der Halteschiene durch eine Rastverbindung gehalten.

Der pro Regalboden oder Halteschiene vorgesehene Regal- oder Schienentransceiver ist vorzugsweise mit einem Solarmodul kombiniert, der die Stromversorgung des Regaltransceivers bildet, so daß dieser auch über lange Zeiträume hin wartungsfrei arbeiten kann.

Die Datenübertragung zwischen der zentralen Datenverarbeitungsanlage und dem Raumtransceiver erfolgt zweckmäßigerweise über das Lichtnetz, so daß innerhalb der Verkaufsstätte keine Datenleitungen verlegt werden müssen. Dadurch wird die Installation des Systems außerordentlich erleichtert, da sie kein eigenes Leitungsnetz für die Datenübertragung benötigt.

Weitere Merkmale und Vorteile der Erfindung ergeben sich aus der folgenden Beschreibung, welche in Verbindung mit den beigefügten Zeichnungen die Erfindung anhand eines Ausführungsbeispieles erläutert. Es zeigt:

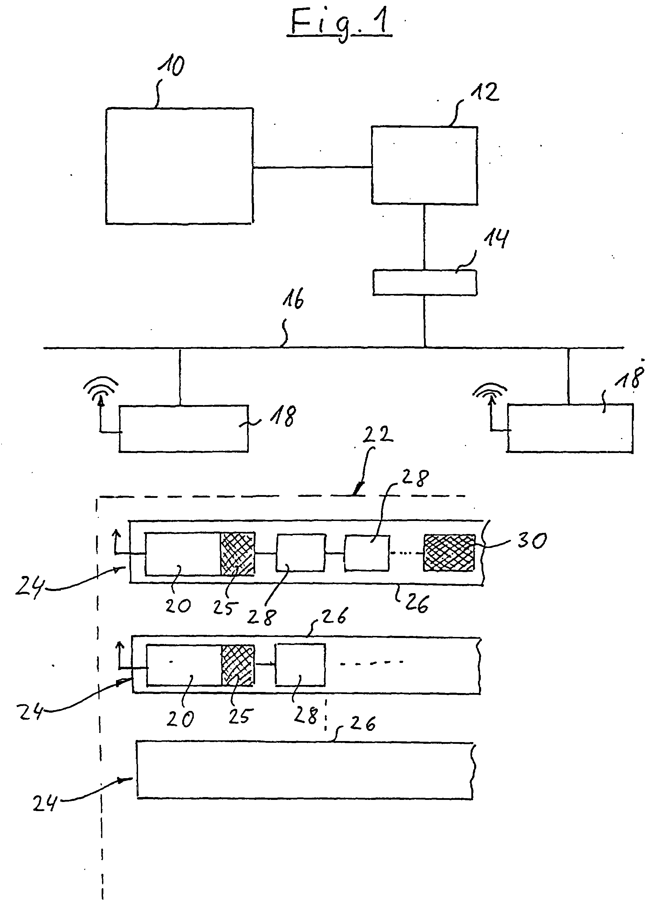

- Fig. 1: eine schematische Darstellung eines Teils eines erfindungsgemäßen Preisanzeigesystems als Blockschaltbild,

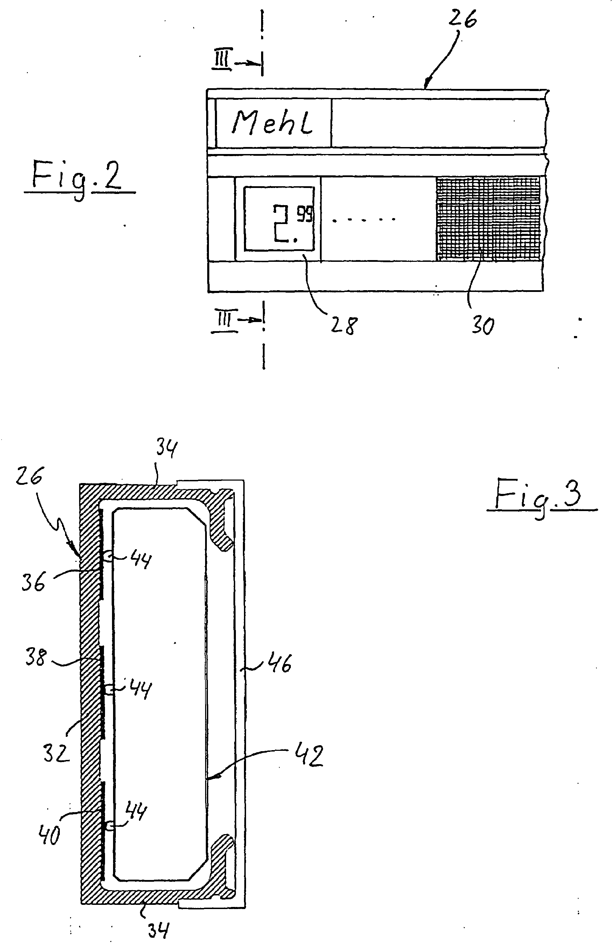

- Fig. 2: eine vergrößerte Draufsicht auf einen Ausschnitt einer Halteschiene mit einem Anzeigemodul und einem Solarmodul und
- Fig. 3: einen Schnitt durch die Halteschiene entlang der Linie III-III in Figur 2.

Ein Preisanzeigesystem der erfindungsgemäßen Art ist insbesondere für Warenhäuser und Verbrauchermärkte bestimmt. Es umfaßt eine zentrale Datenverarbeitungsanlage 10, die mit mindestens einem PC-Arbeistplatz 12 verbunden ist. Dieser ist wiederum mit einem Netztransceiver 14 verbunden, der über das Lichtnetz 16 mit einem oder mehreren Raumtransceivern 18 verbunden ist und die vom PC 12 erhaltenen Daten so umsetzt, daß sie über das Lichtnetz 16 an die Raumtransceiver 18 übermittelt werden können. Ebenso setzt er die von den Raumtransceivern 18 über das Lichtnetz 16 erhaltenen Daten wieder so um, daß sie von dem PC 12 verarbeitet werden können. Die hierzu erforderliche Technik ist bekannt und braucht daher nicht näher erläutert zu werden.

Die Datenverarbeitungsanlage 10 und der PC 12 können in einem Verwaltungsraum der Verkaufsstätte stehen. Der Raumtransceiver 18 dagegen befindet sich in dem Verkaufsraum. Bei kleineren Verkaufsräumen, die übersichtlich gestaltet sind, genügt unter Umständen ein Raumtransceiver 18, während in unübersichtlich gestalteten Räumen oder sehr großen Hallen unter Umständen mehrere Raumtransceiver 18 vorgesehen sind.

Der jeweilige Raumtransceiver 18 sendet und empfängt drahtlos Signale zu beziehungsweise von mehreren Regaltransceivern 20, die in einem Regal 22 jeweils einem Regalboden 24 zugeordnet sind. Als drahtloses Übertragungsverfahren kann jedes auf Grund der räumlichen Gegebenheiten geeignete Übertragungsverfahren verwendet werden, das es erlaubt, die benötigte Datenmenge störungsfrei zu übertragen. Jeder Regaltransceiver 20 hat ein Solarmodul 25 als Stromversorgung.

Jeder Regalboden hat eine Halteschiene 26 zur Halterung des jeweiligen Regaltransceivers 20 und einer Vielzahl von Preisanzeigemoduln 28, die von dem jeweiligen Regaltransceiver 20 angesteuert werden können. Ferner ist an der jeweiligen Halteschiene mindestens ein Solarmodul 30 angeordnet, der jeweils für eine Gruppe von Anzeigemoduln 28, beispielsweise maximal zehn Stück, die Stromquelle darstellt. Der Aufbau der Halteschiene 26 wird nun anhand der Figur 3 näher erläutert.

Die Halteschiene 26 ist eine Kunststoffprofilschiene mit einem C-Profil. Dieses hat einen C-Rücken 32 und zwei C-Schenkel 34. An der Innenseite des C-Rückens 32 sind Leiterbahnen 36, 38 und 40 angeordnet, die beispielsweise von selbstklebenden Kupferbändern gebildet sind, die leicht ausgetauscht werden können. An einer der Leiterbahnen, beispielsweise der Leiterbahn 36, liegt die Versorgungsspannung an, die von dem Solarmodul 30 geliefert wird. Eine weitere Leiterbahn, beispielsweise die Leiterbahn 38, bildet den Masseleiter und die dritte Leiterbahn, im Beispiel die Leiterbahn 40, dient als Signalleitung, über die die Anzeigemoduln 28 mit dem jeweiligen Regaltransceiver 20 in Signalverbindung stehen.

Der jeweilige Anzeigemodul 28 umfaßt ein quaderförmiges Gehäuse 42, das in der in der Figur 3 dargestellten Weise in das C-Profil der Halteschiene 26 eingeclipst wird, wobei die C-Schenkel 34 elastisch ausgelenkt werden. Die Vorderseite des Gehäuses 42 wird von dem Anzeigeschirm eines in dem Gehäuse 42 enthaltenen LCD-Elementes gebildet. Das Gehäuse enthält ferrier noch die für die Signalübermittlung und die Stromversorgung erforderlichen Elemente. Derartige Anzeigemoduln sind an sich im Handel erhältlich und brauchen daher nicht näher erläutert zu werden. An der Rückseite des Gehäuses 42 befinden sich Kontaktelemente 44, die beim Einclipsen des jeweiligen Anzeigemoduls 28 in die Profilschiene 26 an den Leiterbahnen 36, 38, und 40 zur Anlage kommen. In der gleichen Weise wird der jeweilige, hier nicht näher dargestellte Schienentransceiver 20 in die Halteschiene eingeclipst und mit den Leiterbahnen 38 und 40 kontaktiert.

Die Vorderseite der Halteschiene 26 ist durch einen transparenten Deckel 46 abgedeckt, der ebenfalls als Profilleiste ausgebildet ist und die C-Schenkel 34 übergreifend an diesen verrastet ist, wie dies Fig. 3 zeigt.

In die jeweilige Halteschiene kann eine variable Anzahl von Anzeigemoduln 28 eingeclipst werden. Einer bestimmten Anzahl von Anzeigemoduln 28 ist jeweils ein Solarmodul 30 zugeordnet, der diese Anzeigemoduln mit Energie versorgt. Wird die Anzahl von Anzeigemoduln, die von einem Solarmodul 30 problemlos versorgt werden kann, überschritten, muß ein weiterer Solarmodul 30 die Stromversorgung dieser zusätzlichen Anzeigemoduln 28 übernehmen. Damit ist das System außerordentlich flexibel und wartungsfreundlich. Da die in großer Anzahl benötigten Anzeigemoduln 28 selbst weder eine Stromversorgung noch ein Sende- und Empfangselement enthalten, das direkt mit dem Raumtransceiver 18 in Verbindung treten könnte, ist der Preis für diese Anzeigemoduln 28 vergleichsweise niedrig. Der jeweilige Solarmodul 30 kann noch einen Energiespeicher enthalten.

## Patentansprüche

1. Preisanzeigesystem für Verkaufsstätten mit jeweils mindestens einem Verkaufsraum, in dem jeweils eine Mehrzahl von Warenregalen (22) angeordnet ist, wobei an den Regalböden (24) Halteschienen (26) zur Halterung von Preisanzeigemoduln (28) befestigt sind, umfassend eine zentrale Datenverarbeitungsanlage (10), mindestens einen mit dieser über eine zur Datenübertragung geeignete Leitung (16) verbundenen Raumtransceiver (18) zum drahtlosen Senden und Empfangen von Signalen und mindestens einen einem jeweiligen Regalboden (24) zugeordneten Regaltransceiver (20), der mit dem Raumtransceiver (18) in drahtlosem Signalaustausch steht und seinerseits mit einer Mehrzahl von Preisanzeigemoduln (28) verbunden ist, wobei innerhalb der Halteschienen (26) Leiter (36, 38, 40) zur Energieversorgung der Anzeigemoduln (28) und zum Datenaustausch zwischen dem Regaltransceiver (20) und den Anzeigemoduln (28) vorgesehen sind, **dadurch gekennzeichnet, daß** an jeder Halteschiene (26) mindestens ein Solarmodul (30) vorgesehen ist, der die Stromversorgung für eine Mehrzahl von Anzeigemoduln (28) bildet.

2. Preisanzeigesystem nach Anspruch 1, **dadurch gekennzeichnet, daß** die Halteschienen (26) ein C-Profil haben, an dessen Innenseite die Leiter (36, 38, 40) angeordnet sind und zwischen dessen C-Schenkel (34) die Anzeigemodule (28) so einsetzbar sind, daß an ihrer Außenseite angeordnete Kontaktelemente (44) mit den Leitern (36, 38, 40) in Berührung treten.

3. Preisanzeigesystem nach Anspruch 2, **dadurch gekennzeichnet, daß** die Leiter (36, 38, 40) von selbstklebenden Metallbändern gebildet sind, die an der Innenfläche der Halteschiene (26) lösbar angeklebt sind.

4. Preisanzeigesystem nach einem der Ansprüche 1 bis 3, **dadurch gekennzeichnet, daß** die Halteschiene (26) durch einen die Anzeigemodule (28) überdeckenden transparenten Deckel (46) abgedeckt ist.

5. Preisanzeigesystem nach den Ansprüchen 2 und 4, **dadurch gekennzeichnet, daß** der transparente Deckel (46) an den C-Schenkeln (34) der Halteschiene (26) durch eine Rastverbindung gehalten ist.

6. Preisanzeigesystem nach einem der Ansprüche 1 bis 5, **dadurch gekennzeichnet, daß** der Solarmodul (30) austauschbar an der Halteschiene (26) gehalten ist.

7. Preisanzeigesystem nach einem der Ansprüche 1 bis 6, **dadurch gekennzeichnet, daß** der jeweilige Regaltransceiver mit einem seine Stromversorgung bildenden Solarmodul (25) verbunden ist.

8. Preisanzeigesystem nach einem der Ansprüche 2 bis 7, **dadurch gekennzeichnet, daß** der Regaltransceiver (20) zwischen die C-Schenkel (34) der Halteschiene (26) einsetzbar ist.

9. Preisanzeigesystem nach einem der Ansprüche 1 bis 8, **dadurch gekennzeichnet, daß** die Datenübertragung zwischen der zentralen Datenverarbeitungsanlage (10) und dem Raumtransceiver (18) über das Lichtnetz (16) erfolgt.
